# EUROPEAN PATENT SPECIFICATION

(11) **EP 2 308 936 B1**
(45) Date of publication and mention of the grant of the patent: **03.04.2013**
(21) Application number: 10176724.2
(22) Date of filing: 15.09.2010
(51) Int. Cl.: C09J 7/02, C08G 18/62, C08G 18/76, C09J 163/00, C09J 175/04, C08F 220/18, C08K 5/00

(54) **Insulating tape**
Isolierband
Bande isolante

(30) Priority: 18.09.2009 JP 2009216555
(43) Date of publication of application: 13.04.2011
(73) Proprietor: NITTO DENKO CORPORATION, Ibaraki-shi, Osaka 567-8680 (JP)
(72) Inventor: Tamai, Hironori, Ibaraki-shi Osaka 567-8680 (JP); Watanabe, Hiroyuki, Ibaraki-shi Osaka 567-8680 (JP)
(74) Representative: Grünecker, Kinkeldey, Stockmair & Schwanhäusser

(56) References cited:
- EP-A2- 2 033 998
- WO-A1-97/05207
- WO-A1-02/062570
- WO-A1-2009/114683
- DATABASE WPI Week 200426 Thomson Scientific, London, GB; AN 2004-273380 XP002615920, -& JP 2004 026929 A (SHARP KK) 29 January 2004 (2004-01-29) & JP 4 198398 B2 (SHARP KK; KURAMOTO SANGYO KK) 17 December 2008 (2008-12-17)

## Description

### [Technical Field]

The present invention relates to an insulating tape. More specifically, it relates to an insulating pressure-sensitive adhesive tape for use in electric insulating application.

### [Background Art]

Electric insulating pressure-sensitive adhesive tapes (hereinafter, referred to simply as "insulating tapes") have been used as simple and convenient electrical insulation means in various electrical apparatuses, electronic devices and others. These insulating tapes have a plastic film such as polyvinyl chloride film or polyethylene terephthalate film as their base and a rubber-based or acrylic pressure-sensitive adhesive layer formed on one face of the base. Recently, along with diversification of the devices employing such an insulating tape and longer life of the devices, properties demanded for the insulating tape are also diversified. Specifically, one of such demands is the resistance of the insulating tape to discoloration (yellowing) when the device employing the insulating tape is used under severe environmental condition such as outdoor or over a very extended period of time (e.g., 20 years or more). Previously, insulating tapes have been used as hidden in devices in most cases and used in the unidentified state by the users of the devices, but recently in some cases, insulating tapes are also used, as they are visually recognizable by the users of the devices. In such a case, discoloration of the insulating tape is considered to be unfavorable from the viewpoint of preservation of the appearance quality of the device, because it reminds the user of deterioration of the properties of the device itself.

On the other hand, known as a technology to prevent yellowing of pressure-sensitive adhesive tapes is a method of adding an ultraviolet absorbent or an antioxidant to the adhesive (see, for example, Patent Documents 1 and 2).

### [Citation List]

### [Patent Literature]

- Patent Document 1:: Japanese Patent No. 4198398
- Patent Document 2:: Japanese Patent No. 3928029

### [Summary of Invention]

### [Technical Problem]

However when a weathering stabilizer such as ultraviolet absorbent or antioxidant is added to the adhesive in a large amount for prevention of yellowing, it may lead to deterioration of tackiness, the most important function as a tape.

Thus, an object of the present invention is provide an insulating tape that is resistant to yellowing even when used under severe environment or for an extended period of time and retains its favorable appearance (hereinafter, the property to retain the appearance may be referred to as "durability in appearance").

### [Solution to Problem]

After intensive studies, the inventors have found that it was possible to obtain an insulating tape superior in durability in appearance by making the b* value of the insulating tape after storage in an environment of 85°C and 85% RH for 500 hours fall in a particular range. The present invention was made on the basis of the finding.

Specifically, the present invention provides an insulating tape comprising a plastic film base and a pressure-sensitive adhesive layer formed on at least one side of the plastic film base, the insulating tape having a b* value after storage in an environment of 85°C and 85%RH for 500 hours of 3.0 or less.

The pressure-sensitive adhesive layer of said insulating tape is formed with an acrylic pressure-sensitive adhesive composition containing a crosslinking agent and contains an acrylic polymer as its base polymer.

Said crosslinking agent contains an epoxy-based crosslinking agent and/or a non-aromatic isocyanate-based crosslinking agent, and further

contains an aromatic isocyanate-based crosslinking agent in an amount of 0.2 to 1 parts by weight with respect to the total amount (100 parts by weight) of the monomer components constituting the acrylic polymer.

It also provides the insulating tape, wherein the plastic film base is a polyethylene terephthalate film.

### [Advantageous Effects of Invention]

The present invention provides an insulating tape superior in durability in appearance that is resistant to yellowing even when used under severe environment (for example, under high-temperature and high-humidity condition) or for an extended period of time and also to deterioration in appearance of the device employing the insulating tape.

### [Description of Embodiments]

Hereinafter, the favorable embodiments of the present invention will be described in detail.

The insulating tape according to the present invention is an insulating tape, **characterized in that** it has a pressure-sensitive adhesive layer at least on one side of a plastic film base and a b* value, as determined after storage for 500 hours in an environment of 85°C and 85% RH, of 3.0 or less.

The insulating tape according to the present invention may be, for example, a single-sided pressure-sensitive adhesive tape having a pressure-sensitive adhesive layer only on one side of a plastic film base or a double-sided pressure-sensitive adhesive tape having a pressure-sensitive adhesive layer on both sides of a plastic film base. It should be noted that sheet-shaped insulating tapes, i.e., "insulating sheets", are also included in the "insulating tapes" in the present application. The surface of the pressure-sensitive adhesive layer may be referred to as "adhesive face".

In the present application, when the insulating tape according to the present invention is a single-sided pressure-sensitive adhesive tape, the surface having a pressure-sensitive adhesive layer formed thereon, one of the surfaces of the plastic film base, may be referred to as " pressure-sensitive adhesive layer-sided surface". The surface having no pressure-sensitive adhesive layer formed (surface opposite to the pressure-sensitive adhesive layer side) may be referred to as "rear face". When the insulating tape according to the present invention is a single-sided pressure-sensitive adhesive tape, a release coating layer may or may not be formed on the rear face of the plastic film base. The rear face of the plastic film base may be subjected, as needed, to common surface treatment, for example by oxidation treatment by a chemical or physical method, such as corona treatment, chromate treatment, ozone exposure, flame exposure, high-pressure electric shock exposure or ionizing radiation treatment or by coating treatment with an undercoat agent and the like, in the range that does not impair the advantageous effects of the invention.

The insulating tape according to the present invention is used generally in applications demanding electrical insulation; specific use of the insulating tape is not particularly limited; and it can be used, for example, for insulation of indoor wirings, insulation of conductors, insulation of connectors of electric wire, connection and insulation of internal wirings in various devices and apparatuses, insulation of outdoor electric wirings and power/communication cables, and the like.

### [Plastic film base]

The plastic film base for the insulating tape according to the present invention is not particularly limited, if it is an electrically insulating plastic film base, and examples thereof include plastic films of olefinic resins, polyester resins (such as polyethylene terephthalate (PET) and polyethylene naphthalate (PEN)), polyvinyl chloride resins, vinyl acetate resins, amide resins, polyimide resins, polyether ether ketone (PEEK), polyphenylene sulfide (PPS) and others. Among the films above, plastic films of polyester resins are preferable, and polyethylene terephthalate film (PET film) is still more preferable, from the viewpoints of transparency, mechanical strength and dielectric breakdown. The plastic film base may have a single-layer configuration or a multi-layer configuration.

The thickness of the plastic film base is not particularly limited, but preferably, for example 1 to 350 µm, more preferably 4 to 100 µm and still more preferably 12 to 50 µm. When the thickness of the plastic film base is less than 1 µm, the electric insulating properties (dielectric breakdown voltage property) of the film may decline. Alternatively, a thickness of more than 350 µm may make it difficult to wind the tape into roll shape.

The b* value of the plastic film base is not particularly limited, but preferably, for example 0 to 2.0, more preferably 0 to 1.5. A b* value of more than 2.0 may lead to deterioration in appearance of the device in which the insulating tape is used. The b* value is determined by the method based on JIS Z8729.

The haze of the plastic film base is not particularly limited, but preferably, for example 20% or less, more preferably 3% or less. A haze of more than 20% may lead to deterioration in appearance of the device in which the insulating tape is used. The haze can be determined in accordance with JIS K7136, for example, by using a hazemeter (trade name: "HM-150", manufactured by Murakami Color Research Laboratory Co., Ltd.).

The method of making the insulating tape according to the present invention perform desired electric insulating properties is not particularly limited, but, it is preferable to use a method of using a plastic film base having desired electric insulating properties, from the viewpoints of cost and productivity. The electric insulating properties can generally be evaluated, for example, by such as dielectric breakdown voltage and volume resistivity, although they are not particularly limited thereto.

The dielectric breakdown voltage of the plastic film base is preferably 1 kV or more, more preferably 2 kV or more. A dielectric breakdown voltage of less than 1 kV may not make it impossible to make the insulating tape show sufficient electric insulating properties. The dielectric breakdown voltage can be determined by the dielectric breakdown test in accordance with JIS C2318.

The volume resistivity of the plastic film is preferably 10¹⁴ Ω·cm or more, more preferably 10¹⁵ Ω·cm or more. A volume resistivity of less than 10¹⁴ Ω·cm may make it impossible to make the insulating tape show sufficient electric insulating properties. The volume resistivity can be determined by the specific volume resistivity test in accordance with JIS C2318.

### [Pressure-sensitive adhesive layer]

The adhesive may be an adhesive in any form, and examples thereof include emulsion-type adhesives, solvent-type (solution-type) adhesives, active energy ray-curable adhesives, heat-fusing adhesives (hot melt-type adhesives) and others. Among them, solvent-type (solution-type) adhesives and active energy ray-curable adhesives are preferable.

In particular, the adhesive for the pressure-sensitive adhesive layer is an acrylic adhesive, from the viewpoint of weathering resistance. Thus, the pressure-sensitive adhesive layer constituting the insulating tape according to the present invention is an acrylic pressure-sensitive adhesive layer. When the insulating tape according to the present invention is a double-sided pressure-sensitive adhesive tape, both of the pressure-sensitive adhesive layers formed on two sides of the plastic film base are acrylic pressure-sensitive adhesive layers. The acrylic pressure-sensitive adhesive layer above is a pressure-sensitive adhesive layer containing as the base polymer an acrylic polymer constituted by an acrylic monomer as its essential monomer component. The content of the acrylic polymer in the acrylic pressure-sensitive adhesive layer (or acrylic polymer component) is not particularly limited, but is preferably 65 wt % or more (for example, 65 to 100 wt %), more preferably 70 to 99.999 wt %.

Though not critical and may vary depending on the technique for the formation thereof, the acrylic pressure-sensitive adhesive layer may each be formed from an acrylic pressure-sensitive adhesive composition containing an acrylic polymer as an essential component or an acrylic pressure-sensitive adhesive composition containing, as an essential component, a mixture of monomers constituting an acrylic polymer (referred to as "monomer mixture") or the partial polymer of the monomer mixture. Examples of the former compositions include, but are not particularly limited to, so-called solvent-type pressure-sensitive adhesive compositions, and examples of the latter compositions include, but are not particularly limited to, so-called active energy ray-curable pressure-sensitive adhesive compositions. The pressure-sensitive adhesive composition for the acrylic pressure-sensitive adhesive layer (acrylic pressure-sensitive adhesive composition) is preferably a solvent-type acrylic pressure-sensitive adhesive composition from the viewpoint of cost and a active energy ray-curable acrylic pressure-sensitive adhesive composition from the viewpoint of prevention of yellowing of the insulating tape. In particular, solvent-type acrylic pressure-sensitive adhesive compositions are more preferable, from the viewpoint of the balance between cost and yellowing prevention. The acrylic pressure-sensitive adhesive composition may contain additionally, as needed, crosslinking agents and other various additives.

The "pressure-sensitive adhesive composition" also means a "composition for forming a pressure-sensitive adhesive layer ". Alternatively, the "monomer mixture" means a mixture composed of monomer components constituting the acrylic polymer alone. The "partial polymer" means a composition in which one or two of the components above in the composition constituting the monomer mixture are partially polymerized.

### (Acrylic polymer)

The acrylic polymer is preferably an acrylic polymer composed of an alkyl (meth)acrylate having a straight- or branched -chain alkyl group as its essential monomer component. The "(meth)acrylic" means "acrylic" and/or "methacrylic", and the same is true for other descriptions.

Examples of the alkyl (meth)acrylates having a straight- or branched-chain alkyl group (hereinafter, referred to simply as "alkyl (meth)acrylates") include (meth)acrylic C₁₋₂₀ alkyl esters [alkyl (meth)acrylates with an alkyl group having 1 to 20 carbon atoms] such as methyl (meth)acrylate, ethyl (meth)acrylate, propyl (meth)acrylate, isopropyl (meth)acrylate, n-butyl (meth)acrylate, isobutyl (meth)acrylate, s-butyl (meth)acrylate, t-butyl (meth)acrylate, pentyl (meth)acrylate, isopentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate and eicosyl (meth)acrylate. Among them, (meth)acrylic C₂₋₁₄ alkyl esters are preferable, and (meth)acrylic C₂₋₁₀ alkyl esters are more preferable. These alkyl (meth)acrylates may be used alone or in combination of two or more.

The content of the alkyl (meth)acrylate is preferably 50 to 100 wt % (percent by weight), more preferably 60 to 99.9 wt %, with respect to the total amount (100 wt %) of the monomer components constituting the acrylic polymer. When the content of the alkyl (meth)acrylate is less than 50 wt %, the acrylic polymer may not show favorable properties as an acrylic polymer (such as tackiness).

The monomer components constituting the acrylic polymer may include additionally one or more polar group-containing monomers, one or more polyfunctional monomers and one or more other copolymerizable monomers as copolymerization monomer components. It is possible, for example, to raise the adhesive strength to an adherend and the cohesive power of the pressure-sensitive adhesive layer, by use of the copolymerization monomer components.

Examples of the polar group-containing monomers include carboxyl group-containing monomers such as (meth)acrylic acid, itaconic acid, maleic acid, fumaric acid, crotonic acid and isocrotonic acid or the anhydrides thereof (such as maleic anhydride); hydroxyl group-containing monomers including hydroxyalkyl (meth)acrylates such as 2-hydroxyethyl (meth)acrylate, 3-hydroxypropyl (meth)acrylate, 4-hydroxybutyl (meth)acrylate and 6-hydroxyhexyl (meth)acrylate, vinyl alcohol and allyl alcohol; amide group-containing monomers such as (meth)acrylamide, N,N-dimethyl(meth)acrylamide, N-methylol(meth)acrylamide, N-methoxymethyl(meth)acrylamide, N-butoxymethyl(meth)acrylamide and N-hydroxyethylacrylamide; amino group-containing monomer such as aminoethyl (meth)acrylate, dimethylaminoethyl (meth)acrylate and t-butyl aminoethyl (meth)acrylate; glycidyl group-containing monomers such as glycidyl (meth)acrylate and methylglycidyl (meth)acrylate; cyano group-containing monomers such as acrylonitrile and methacrylonitrile; heterocyclic ring-containing vinyl monomers such as N-vinyl-2-pyrrolidone, (meth)acryloylmorpholine, N-vinylpyridine, N-vinylpiperidone, N-vinylpyrimidine, N-vinylpiperazine, N-vinylpyrrole, N-vinylimidazole and N-vinyloxazole; alkoxyalkyl (meth)acrylate-based monomers such as methoxyethyl (meth)acrylate and ethoxyethyl (meth)acrylate; sulfonic acid group-containing monomer such as sodium vinylsulfonate; phosphoric acid group-containing monomer such as 2-hydroxyethyl acryloyl phosphate; imide group-containing monomers such as cyclohexylmaleimide and isopropylmaleimide; isocyanate group-containing monomers such as 2-methacryloyloxyethyl isocyanate; and vinyl ester monomers such as vinyl acetate and vinyl propionate. In particular, the polar group-containing monomer is preferably a carboxyl group-containing monomer or a vinyl ester monomer, more preferably acrylic acid or vinyl acetate. The polar group-containing monomers may be used alone or in combination of two or more.

The content of the polar group-containing monomer is preferably 1 to 30 wt %, more preferably 3 to 20 wt %, with respect to the total amount (100 wt %) of the monomer components constituting the acrylic polymer. A polar group-containing monomer content of more than 30 wt % may lead to excessive increase in cohesive power and deterioration in tackiness of the pressure-sensitive adhesive layer. Alternatively, a polar group-containing monomer content of less than 1 wt % may lead to deterioration in cohesive power and also in durability of the pressure-sensitive adhesive layer.

Examples of the polyfunctional monomers include hexanediol di(meth)acrylate, butanediol di(meth)acrylate, (poly)ethylene glycol di(meth)acrylate, (poly)propylene glycol di(meth)acrylate, neopentylglycol di(meth)acrylate, pentaerythritol di(meth)acrylate, pentaerythritol tri(meth)acrylate, dipentaerythritol hexa(meth)acrylate, trimethylolpropane tri(meth)acrylate, tetramethylolmethane tri(meth)acrylate, allyl (meth)acrylate, vinyl (meth)acrylate, divinylbenzene, epoxy acrylates, polyester acrylates, and urethane acrylates. The polyfunctional monomers may be used alone or in combination of two or more.

The content of the polyfunctional monomer is preferably 0.5 wt % or less (for example, 0 to 0.5 wt %), more preferably 0 to 0.3 wt %, with respect to the total amount (100 wt %) of the monomer components constituting the acrylic polymer. A content of more than 0.5 wt % may lead to excessive increase in cohesive power and deterioration in tackiness of the pressure-sensitive adhesive layer. The polyfunctional monomer may not be used when a crosslinking agent is used, but the content of the polyfunctional monomer is preferably 0.001 to 0.5 wt %, more preferably 0.002 to 0.1 wt %, when no crosslinking agent is used.

Examples of the copolymerizable monomers other than the alkyl (meth)acrylates, polar group-containing monomers and polyfunctional monomers include alicyclic hydrocarbon group-containing (meth)acrylic esters such as cyclopentyl (meth)acrylate, cyclohexyl (meth)acrylate and isobornyl (meth)acrylate; aryl (meth)acrylic ester such as phenyl (meth)acrylate; aromatic vinyl compounds such as styrene and vinyltoluene; olefins or dienes such as ethylene, butadiene, isoprene and isobutylene; vinyl ethers such as vinyl alkyl ethers; and vinyl chloride.

The acrylic polymer can be prepared by polymerizing the monomer components by a known, commonly-used polymerization method. Examples of the polymerization method for the acrylic polymer include solution polymerization method, emulsion polymerization method, bulk polymerization method, polymerization method by active energy ray irradiation (active energy ray polymerization method), and the like. Among the methods above, a solution polymerization method and an active energy ray polymerization method are preferable, from the viewpoints of transparency, water resistance and others, and a solution polymerization method is more preferably from the viewpoint of cost. In polymerization of the acrylic polymer, component suitable for the polymerization method, such as polymerization initiators, chain-transfer agents, emulsifiers and solvents, may be used, as selected properly from those known or commonly-used.

In preparation of the acrylic polymer, polymerization initiators such as thermal polymerization initiators and photopolymerization initiators (photoinitiators) may be used depending on the kind of the polymerization reaction. These polymerization initiators may be used alone or in combination of two or more. Although use of the polymerization initiator is not particularly limited, generally, a thermal polymerization initiator is frequently used as a polymerization initiator in the solution polymerization method, while a photopolymerization initiator is frequently used as a polymerization initiator in the active energy ray polymerization method.

Examples of the thermal polymerization initiators include azo-based polymerization initiators, peroxide-based polymerization initiators, and redox-based polymerization initiators. Examples of the azo-based initiators include 2,2'-azobisisobutylonitrile (hereinafter, referred to as AIBN), 2,2'-azobis-2-methylbutylonitrile (hereinafter, referred to as AMBN), dimethyl 2,2'-azobis(2-methylpropionate), 4,4'-azobis-4-cyanovaleric acid, azobisisovaleronitrile, 2,2'-azobis(2-amidinopropane) dihydrochloride, 2,2'-azobis[2-(5-methyl-2-imidazolin-2-yl)propane] dihydrochloride, 2,2'-azobis(2-methylpropionamidine) disulfate salt, 2,2'-azobis(N,N'-dimethyleneisobutylamidine) dihydrochloride, and the like. Examples of the peroxide-based polymerization initiators include t-butyl hydroperoxide, di-t-butyl peroxide, 1,1-bis(t-butylperoxy)-3,3,5-trimethylcyclohexane, 1,1-bis(t-butylperoxy)cyclododecane, dicumyl peroxide, and the like.

Among them, the thermal polymerization initiator for use is preferably an azo-based polymerization initiator for prevention of yellowing of the insulating tape. In particular, use of a polymerization initiator based on benzoyl group-containing peroxide, such as benzoyl peroxide or t-butyl peroxybenzoate, as the thermal polymerization initiator is unfavorable, because it leads to facile yellowing of the insulating tape. In the case of an acrylic polymer, the amount of the azo-based polymerization initiator used is not particularly limited, but, for example, preferably 0.05 to 0.5 parts by weight, more preferably 0.1 to 0.3 parts by weight, with respect to the total amount (100 parts by weight) of the monomer components constituting the acrylic polymer.

Examples of the photopolymerization initiators include, but are not particularly limited to, benzoin ether-based photopolymerization initiators, acetophenone-based photopolymerization initiators, α-ketol-based photopolymerization initiators, aromatic sulfonyl chloride-based photopolymerization initiators, optically active oxime-based photopolymerization initiators, benzoin-based photopolymerization initiators, benzil-based photopolymerization initiators, benzophenone-based photopolymerization initiators, ketal-based photopolymerization initiators, and thioxanthone-based photopolymerization initiators. In the case of an acrylic polymer, the amount of the photopolymerization initiator used is not particularly limited, but, for example, preferably 0.01 to 0.2 parts by weight, more preferably 0.05 to 0.15 parts by weight, with respect to the total amount (100 parts by weight) of the monomer components constituting the acrylic polymer.

Examples of the benzoin ether-based photopolymerization initiators include benzoin methyl ether, benzoin ethyl ether, benzoin propyl ether, benzoin isopropyl ether, benzoin isobutyl ether, 2,2-dimethoxy-1,2-diphenylethan-1-one, anisole methyl ether, and the like. Examples of the acetophenone-based photopolymerization initiators include 2,2-diethoxyacetophenone, 2,2-dimethoxy-2-phenylacetophenone, 1-hydroxycyclohexylphenylketone, 4-phenoxydichloroacetophenone, 4-(t-butyl)dichloroacetophenone, and the like. Examples of the α -ketol-based photopolymerization initiators include 2-methyl-2-hydroxypropiophenone, 1-[4-(2-hydroxyethyl)phenyl]-2-methylpropan-1-one, and the like. Examples of the aromatic sulfonyl chloride-based photopolymerization initiators include 2-naphthalenesulfonyl chloride and the like. Examples of the optically active oxime-based photopolymerization initiators include 1-phenyl-1,1-propandione-2-(o-ethoxycarbonyl)-oxime and the like. Examples of the benzoin-based photopolymerization initiators include benzoin and the like. Examples of the benzil-based photopolymerization initiators include benzil and the like. Examples of the benzophenone-based photopolymerization initiators include benzophenone, benzoylbenzoic acid, 3,3'-dimethyl-4-methoxybenzophenone, polyvinylbenzophenone, α -hydroxycyclohexylphenylketone, and the like. Examples of the ketal-based photopolymerization initiators include benzyldimethyl ketal and the like. Examples of the thioxanthone-based photopolymerization initiators include thioxanthone, 2-chlorothioxanthone, 2-methylthioxanthone, 2,4-dimethylthioxanthone, isopropylthioxanthone, 2,4-diisopropylthioxanthone, dodecylthioxanthone, and the like.

Various common solvents can be used in the solution polymerization above. Examples of the solvents are organic solvents including esters such as ethyl acetate and n-butyl acetate; aromatic hydrocarbons such as toluene and benzene; aliphatic hydrocarbons such as n-hexane and n-heptane; alicyclic hydrocarbons such as cyclohexane and methylcyclohexane; ketones such as methylethylketone and methylisobutylketone; and the like. These solvents may be used alone or in combination of two or more.

Examples of the active energy rays irradiated in the active energy ray polymerization (photopolymerization) include ionizing radiations such as α ray, β ray, γ ray, neutron beam and electron beam, and ultraviolet ray, and in particular, ultraviolet ray is favorable. The irradiation energy, the exposure period, the irradiation method or the like of the active energy ray is not particularly limited, if it causes reaction of the monomer components by activating the photopolymerization initiator.

The weight-average molecular weight of the acrylic polymer is preferably 300,000 to 1,200,000, more preferably 400,000 to 1,000,000, and still more preferably 500,000 to 900,000. A weight-average molecular weight of less than 300,000 may prohibit expression of favorable tackiness, while a weight-average molecular weight of more than 1,200,000 may cause a problem in coatability. The weight-average molecular weight can be controlled, for example, by adjustment of the kind and amount of the polymerization initiator, the temperature and the period of polymerization, the monomer concentration and the rate of monomer dropwise addition.

### (Pressure-sensitive adhesive composition)

The pressure-sensitive adhesive layer constituting the insulating tape according to the present invention is prepared with a pressure-sensitive adhesive composition and, for example in the case of an acrylic pressure-sensitive adhesive layer, it is prepared from an acrylic pressure-sensitive adhesive composition containing an acrylic polymer as its essential component or an acrylic pressure-sensitive adhesive composition containing a monomer mixture or the partial polymer as its essential component, as described above. The pressure-sensitive adhesive composition preferably contains a crosslinking agent, for example for the purpose of crosslinking the base polymer (preferably, acrylic polymer) in the pressure-sensitive adhesive layer and thus increasing the cohesive power of the pressure-sensitive adhesive layer. Thus, the pressure-sensitive adhesive layer constituting the insulating tape according to the present invention is preferably a pressure-sensitive adhesive layer formed with a pressure-sensitive adhesive composition (preferably, an acrylic pressure-sensitive adhesive composition) containing a crosslinking agent.

The crosslinking agent is not particularly limited, and a known or commonly-used crosslinking agent can be used, as properly selected. Typical examples thereof include epoxy-based crosslinking agents, isocyanate-based crosslinking agents, melamine-based crosslinking agents, peroxide-based crosslinking agents, urea-based crosslinking agents, metal alkoxide-based crosslinking agents, metal chelate-based crosslinking agents, metal salt-based crosslinking agents, carbodiimide-based crosslinking agents, oxazoline-based crosslinking agents, aziridine-based crosslinking agents, amine-based crosslinking agents, and the like. These crosslinking agents may be used alone or as a mixture of two or more.

The epoxy-based crosslinking agent for use may be a polyfunctional epoxy compound having multiple epoxy groups in the molecule. Examples thereof include N,N,N',N'-tetraglycidyl-m-xylenediamine, diglycidylaniline, 1,3-bis(N,N-diglycidylaminomethyl)cyclohexane, 1,6-hexanediol diglycidyl ether, neopentylglycol diglycidyl ether, ethylene glycol diglycidyl ether, propylene glycol diglycidyl ether, polyethylene glycol diglycidyl ether, polypropylene glycol diglycidyl ether, sorbitol polyglycidyl ether, glycerol polyglycidyl ether, pentaerythritol polyglycidyl ether, polyglycerol polyglycidyl ether, sorbitan polyglycidyl ether, trimethylolpropane polyglycidyl ether, diglycidyl adipate, diglycidyl o-phthalate, triglycidyl-tris(2-hydroxyethyl)isocyanurate, resorcin diglycidyl ether, bisphenol-S-diglycidyl ether, epoxy resins having two or more epoxy groups in the molecule, and the like. Examples of the commercial products include "Tetrad C" (trade name, produced by Mitsubishi Gas Chemical Company, Inc.).

The isocyanate-based crosslinking agent for use may be, for example, a polyfunctional isocyanate compound having multiple isocyanate groups in the molecule. Examples thereof include aliphatic isocyanate-based crosslinking agents (aliphatic isocyanate compounds) such as 1,2-ethylene diisocyanate, 1,4-butylene diisocyanate and 1,6-hexamethylene diisocyanate; alicyclic isocyanate-based crosslinking agents (alicyclic isocyanate compounds) such as cyclopentylene diisocyanate, cyclohexylene diisocyanate, isophorone diisocyanate, hydrogenated tolylene diisocyanates and hydrogenated xylene diisocyanates; aromatic isocyanate-based crosslinking agents (aromatic isocyanate compounds) such as 2,4-tolylene diisocyanate, 2,6-tolylene diisocyanate, 4,4'-diphenylmethane diisocyanate and xylylene diisocyanate; and the like. In addition, a trimethylolpropane/tolylene diisocyanate adduct [trade name: "Coronate L", produced by Nippon Polyurethane Industry Co., Ltd.] (aromatic isocyanate-based crosslinking agent), a trimethylolpropane/hexamethylene diisocyanate adduct [trade name: "Coronate HL", produced by Nippon Polyurethane Industry Co., Ltd.] (aliphatic isocyanate-based crosslinking agent) and the like are also used.

In particular, for prevention of yellowing of the pressure-sensitive adhesive layer in the insulating tape, the crosslinking agent is preferably an epoxy-based crosslinking agent and/or a non-aromatic isocyanate-based crosslinking agent, more preferably an epoxy-based crosslinking agent. The non-aromatic isocyanate-based crosslinking agent means an isocyanate-based crosslinking agent other than the aromatic isocyanate-based crosslinking agents described above, such as an aliphatic isocyanate-based crosslinking agent or an alicyclic isocyanate-based crosslinking agent.

The content of the epoxy-based crosslinking agent and/or the non-aromatic isocyanate-based crosslinking agent is not particularly limited, but it is, for example, preferably 0.005 to 5 parts by weight, more preferably 0.01 to 1 parts by weight, with respect to the total amount (100 parts by weight) of the monomer components constituting the acrylic polymer, in the case of an acrylic pressure-sensitive adhesive layer. When an epoxy-based crosslinking agent and a non-aromatic isocyanate-based crosslinking agent are used in combination as the crosslinking agent, the total content of these agents is in the range above.

For prevention of yellowing of the insulating tape, the content (used amount) of the aromatic isocyanate-based crosslinking agent is 0.2 to parts by weight, with respect to the total amount (100 parts by weight) of the monomer components constituting the acrylic polymer. The aromatic isocyanate-based crosslinking agent has a structure having an isocyanate group directly bound to at least one carbon atom forming the aromatic ring. Such an aromatic isocyanate-based crosslinking agent may take on a yellow color by excitation of the aromatic ring by sunlight and thus constitutes a risk factor for yellowing of the insulating tape.

When the insulating tape according to the present invention is a single-sided pressure-sensitive adhesive tape, it may be stored, as it is wound around a roll without separator in the form in which the pressure-sensitive adhesive layer is protected by the rear face of the plastic film base (in the form wound around a roll), from the viewpoints of processability and cost. In such a case, when the insulating tape is unwound from the roll during use, there may be a phenomenon of part of the pressure-sensitive adhesive layer remaining stringily on the tape edges, so-called "stringiness (stringiness phenomenon)", leading to deterioration in handleability. It is considered to be a phenomenon caused by insufficient adhesive power (anchor force) of the pressure-sensitive adhesive layer to the pressure-sensitive adhesive layer-sided surface of the plastic film base and thus, by anchor failure of the pressure-sensitive adhesive layer. Seemingly, such stringiness occurs, particularly when no release coating layer is formed on the rear face of the plastic film base of the insulating tape according to the present invention. It would be because, when there is no release coating layer formed on the rear face, the adhesive power of the pressure-sensitive adhesive layer to the rear face of the plastic film base increases and the adhesive power (anchor force) of the pressure-sensitive adhesive layer to the pressure-sensitive adhesive layer-sided surface of the plastic film base becomes relatively insufficient. As described above, an example of the case when there is no rear-face release layer formed on the rear face of the plastic film base of the insulating tape according to the present invention (single-sided pressure-sensitive adhesive tape) is a case when the insulating tape is used in the form in which an another adhesive material (such as other pressure-sensitive adhesive tape) is bonded to the rear face of the plastic film base.

For control of the stringiness of the insulating tape according to the present invention, an aromatic isocyanate-based crosslinking agent is preferably contained as the crosslinking agent (crosslinking agent component) in an amount in the range described below. It is seemingly possible by use of an aromatic isocyanate-based crosslinking agent to improve the adhesive power (anchor force) of the pressure-sensitive adhesive layer to the pressure-sensitive adhesive layer-sided surface of the plastic film base efficiently and to control the stringiness.

As described above, for prevention of yellowing of the insulating tape, the content of the aromatic isocyanate-based crosslinking agent is 1 parts by weight or less (for example, 0.2 to 1 parts by weight), preferably 0.8 parts by weight or less (for example, 0.2 to 0.8 parts by weight) with respect to the total amount (100 parts by weight) of the monomer components constituting the acrylic polymer, in the case of an acrylic pressure-sensitive adhesive layer. A content of more than 1 parts by weight may lead to easier yellowing of the insulating tape. As described above, for prevention of the stringiness of the insulating tape, the content of the aromatic isocyanate-based crosslinking agent is 0.2 to 1 parts by weight, preferably 0.2 to 0.8 parts by weight, with respect to the total amount (100 parts by weight) of the monomer components constituting the acrylic polymer, in the case of an acrylic pressure-sensitive adhesive layer. A content of more than 1 parts by weight may lead to easier yellowing of the insulating tape, while a content of less than 0.2 parts by weight may lead to deterioration in handleability of the insulating tape due to stringiness. It is advantageous from the viewpoint of cost to control the content of the aromatic isocyanate-based crosslinking agent in the range above for prevention of stringiness described above, particularly when the insulating tape according to the present invention is a single-sided pressure-sensitive adhesive tape and has no release coating layer on the rear face of the plastic film base, because yellowing and also stringiness are controlled and thus it is possible, as described above, to store the insulating tape without separator in the form as it is wound around a roll.

The pressure-sensitive adhesive composition may contain, as needed in addition to the crosslinking agents described above, known additives such as aging inhibitors, fillers, colorants (e.g., pigments and dyes), ultraviolet absorbents, antioxidants, chain-transfer agents, plasticizers, softeners, surfactants and antistatic agents, and also solvents (for example, solvents usable during solution polymerization of the acrylic polymer described above).

The method of producing the pressure-sensitive adhesive layer constituting the insulating tape according to the present invention is not particularly limited and varies, for example, depending on the polymerization method for the base polymer and may be any known or commonly-used method of producing a pressure-sensitive adhesive layer, and examples thereof include the following methods (1) to (3):
(1) an adhesive composition containing a mixture (monomer mixture) containing monomer components or the partial polymer thereof for the base polymer (such as acrylic polymer) and, as needed, additives such as photopolymerization initiators and crosslinking agents is applied (coated) on a plastic film base or a separator, and the resulting film is irradiated with active energy ray (particularly preferably with ultraviolet ray), to give a pressure-sensitive adhesive layer;
(2) a pressure-sensitive adhesive composition (solution) containing a base polymer and a solvent and, as needed, additives such as crosslinking agents is applied (coated) on a plastic film base or a separator, and the resulting film is dried and/or hardened, to give a pressure-sensitive adhesive layer; and
(3) the pressure-sensitive adhesive layer formed in (1) is dried additionally. In particular, the method (2) is preferable, because of the favorable balance between cost and yellowing prevention.

In the method of producing the pressure-sensitive adhesive layer above, the pressure-sensitive adhesive composition can be applied (coated) by a known coating method, and a commonly-used coater, such as gravure roll coater, reverse roll coater, kiss roll coater, dip roll coater, bar coater, knife coater, spray coater, comma coater or direct coater, may be used.

The thickness of the pressure-sensitive adhesive layer is not particularly limited, but, preferably 1 to 100 µm, more preferably 5 to 50 µm and particularly preferably 10 to 30 µm. A pressure-sensitive adhesive layer thickness of more than 100 µm may result in insufficient drying, crinkling during winding of the coated layer, or deterioration in processability. A pressure-sensitive adhesive layer thickness of less than 1 µm may result in insufficient stress dispersion because the pressure-sensitive adhesive layer is too thin and consequently easier exfoliation of the pressure-sensitive adhesive layer.

### [Insulating tape]

A separator (release liner) may be arranged on the pressure-sensitive adhesive layer surface (adhesive face) of the insulating tape according to the present invention before use. The separator, which is used for protection of the pressure-sensitive adhesive layer, is removed before the pressure-sensitive adhesive layer is bonded to an adherend. The separator may not be arranged on the adhesive face. The separator for use is not particularly limited and may be a commonly-used release paper, and examples thereof include bases having a release coating layer, less adhesive bases composed of a fluorine polymer, and less adhesive bases composed of a nonpolar polymer. Examples of the bases having a release coating layer include plastic films and papers surface-treated with a release coating agent such as silicone-, long-chain alkyl- or fluorine-based processing agent or molybdenum sulfide. Examples of the fluorine-based polymers include polytetrafluoroethylene, polychloro-trifluoroethylene, polyvinyl fluoride, polyvinylidene fluoride, tetrafluoroethylene-hexafluoropropylene copolymers, chlorofluoroethylene-vinylidene fluoride copolymers, and the like. Examples of the nonpolar polymers include olefinic resins (such as polyethylene and polypropylene) and the like. The separator can be formed by a known or commonly-used method. In addition, the thickness of the separator for example is not particularly limited.

The total thickness of the insulating tape according to the present invention is preferably 5 to 550 µm, more preferably 10 to 200 µm. A total thickness of the insulating tape according to the present invention of less than 5 µm may prohibit favorable balance between tackiness and electric insulating properties (dielectric breakdown voltage properties), while a total thickness of more than 550 µm may lead to deterioration of the processability of the insulating tape. The "total thickness" does not include the thickness of the separator arranged on the adhesive face.

The b* value of the insulating tape according to the present invention after storage in an environment of 85°C and 85% RH for 500 hours is 3.0 or less (for example, 0 to 3.0), preferably 0 to 2.0 and more preferably 0 to 1.5. A b* value above of more than 3.0 leads to yellowing of the insulating tape and deterioration in appearance of the device employing the insulating tape, when used under severe environments or for an extended period of time. The b* value of the insulating tape in the present invention can be determined, for example, by the method in (evaluation) "(1) b* value (chromaticity)" described below.

The storage test under an environment of 85°C, 85% RH for 500 hours has a meaning as an accelerated weathering test (acceleration test). The yellowing behavior of the insulating tape in such a test is equivalent to the yellowing behavior, for example, after use in an environment of 25°C for 26 years. According to the Arrhenius equation, a time acceleration factor of 460 times is obtained at a temperature 60°C or higher than room temperature and the product of 500 hours (21 days) and 460 times is 9580 days (26 years). Thus, the insulating tape according to the present invention is resistant to yellowing, even when used under severe environmental condition (for example, high-temperature and high-humidity condition) or for an extended period of time, and provides the device employing the insulating tape with superior durability in appearance.

The haze of the insulating tape according to the present invention is not particularly limited and, for example, preferably 25% or less, more preferably 5% or less. A haze of more than 25% may lead to deterioration in appearance of the device employing the insulating tape. The haze can be determined in accordance with JIS K7136, for example, by using a hazemeter (trade name: "HM-150", manufactured by Murakami Color Research Laboratory Co., Ltd.).

The dielectric breakdown voltage of the insulating tape according to the present invention is preferably 1 kV or more, more preferably 2 kV or more. A dielectric breakdown voltage of less than 1 kV may prohibit favorable electrical insulation. The dielectric breakdown voltage can be determined by a test in accordance with JIS C2107.

The insulating tape according to the present invention can be produced by a known, commonly-used production method. For example, the pressure-sensitive adhesive layer described above may be formed directly on the surface of a plastic film base (direct coating method) or the pressure-sensitive adhesive layer may be formed on a plastic film base by forming the pressure-sensitive adhesive layer described above on a separator and transferring (bonding) it onto a plastic film base (transfer method).

The insulating tape according to the present invention, which has a b* value of 3.0 or less after storage in an environment of 85°C and 85% RH for 500 hours, is resistant to yellowing and superior in durability in appearance, even if used under severe environmental condition (for example, high-temperature and high-humidity condition) or for an extended period of time. In addition, if a crosslinking agent in the particular composition and the particular range described above is used, it is possible to control the b* value in the range above without use of a large amount of weathering-resistant stabilizer (ultraviolet absorbent, antioxidant or the like), and thus, the resulting insulating tape becomes superior both in tackiness and durability in appearance. For that reason, the insulating tape according to the present invention can be used favorably in applications for electric insulation of the devices strongly demanding superior durability in appearance.

If the content of the aromatic isocyanate-based crosslinking agent is controlled in the particular range described above for prevention of stringiness of the insulating tape, the resulting insulating tape becomes superior in yellowing resistance and also in anchoring property of the pressure-sensitive adhesive layer to the surface of the plastic film base. Thus, particularly even when the insulating tape according to the present invention is a single-sided pressure-sensitive adhesive tape and is stored, as wound around a roll, in the form in which the pressure-sensitive adhesive layer is protected by the rear face of the plastic film base, the tape does not show stringiness when it is unwound. Thus, the insulating tape (single-sided pressure-sensitive adhesive tape) according to the present invention is advantageous from the viewpoint of cost, because it can be stored without separator.

### Examples

Hereinafter, the present invention will be described more in detail, with reference to Examples, but it should be understood that the present invention is not restricted by these Examples. In the following description and Table 1, the amount of Coronate L added (addition amount) is expressed by the amount as solid content (parts by weight).

### Preparative example of acrylic polymer A

100 parts by weight of n-butyl acrylate, 3 parts by weight of acrylic acid and 5 parts by weight of vinyl acetate as monomer components, 0.2 parts by weight of 2,2'-azobisisobutylonitrile as a polymerization initiator and 250 parts by weight of toluene as a polymerization solvent were placed in a separable flask, and the mixture was agitated for 1 hour while introducing nitrogen gas. After removal of oxygen in the polymerization system in this way, the mixture was heated to 80°C for reaction for 7 hours; toluene was added for adjustment of concentration, to give an acrylic polymer solution having a solid content concentration of 20 wt % (referred to as "acrylic polymer solution A"). The weight-average molecular weight of the acrylic polymer (referred to as "acrylic polymer A") in the acrylic polymer solution A was 500,000.

### Preparative example of acrylic polymer B

100 parts by weight of n-butyl acrylate and 5 parts by weight of acrylic acid as monomer components, 0.5 parts by weight of benzoyl peroxide as a polymerization initiator and 250 parts by weight of toluene as a polymerization solvent were placed in a separable flask, and the mixture was agitated for 1 hour while introducing nitrogen gas. After removal of oxygen in the polymerization system in this way, the mixture was heated to 80°C for reaction for 7 hours; toluene was added for adjustment of concentration, to give an acrylic polymer solution having a solid content concentration of 20 wt % (referred to as "acrylic polymer solution B"). The weight-average molecular weight of the acrylic polymer (referred to as "acrylic polymer B") in the acrylic polymer solution B was 700,000.

### Reference Example 1

As shown in Table 1, "Tetrad C" (trade name, produced by Mitsubishi Gas Chemical Company, Inc., epoxy-based crosslinking agent) was added as crosslinking agent to the acrylic polymer solution A in an amount of 0.03 parts by weight with respect to 100 parts by weight of acrylic polymer A, and the resulting solution was mixed, to give a pressure-sensitive adhesive composition (solution).
The pressure-sensitive adhesive composition (solution) thus obtained was cast on a polyester film having a thickness of 25 µm ("Lumirror S10#25", PET film, produced by Toray Industries, Inc.), to a post-drying thickness of 25 µm and heat-dried under atmospheric pressure at 120°C for 3 minutes, to form a pressure-sensitive adhesive layer. In addition, a pressure-sensitive adhesive layer was also formed, by similar processing, on the face of the PET film opposite to the face carrying the pressure-sensitive adhesive layer, and the resulting film was aged at 50°C for 24 hours, to give an insulating tape (double-sided pressure-sensitive adhesive tape).

### Example 2

As shown in Table 1, "Tetrad C" (trade name, produced by Mitsubishi Gas Chemical Company, Inc., epoxy-based crosslinking agent) and "Coronate L" (trade name, produced by Nippon Polyurethane Industry Co., Ltd., aromatic isocyanate-based crosslinking agent) respectively in amounts of 0.03 and 0.2 parts by weight with respect to 100 parts by weight of acrylic polymer A were added as crosslinking agents to the acrylic polymer solution A, and the resulting solution was mixed to give a pressure-sensitive adhesive composition (solution).
The pressure-sensitive adhesive composition (solution) thus obtained was cast on a polyester film having a thickness of 25 µm ("Lumirror S 10#25", PET film, produced by Toray Industries, Inc.), to a post-drying thickness of 25 µm and heat-dried under atmospheric pressure at 120°C for 3 minutes and aged at 50°C for 24 hours, to give an insulating tape (single-sided pressure-sensitive adhesive tape).

### Comparative Example 1

As shown in Table 1, "Coronate L" (trade name, produced by Nippon Polyurethane Industry Co., Ltd., aromatic isocyanate-based crosslinking agent) was added to the acrylic polymer solution B as crosslinking agent in an amount of 3 parts by weight with respect to 100 parts by weight of acrylic polymer B, and the resulting solution was mixed, to give a pressure-sensitive adhesive composition (solution).
The pressure-sensitive adhesive composition (solution) thus obtained was cast on a polyester film having a thickness of 25 µm ("Lumirror S10#25", PET film, produced by Toray Industries, Inc.), to a post-drying thickness of 25 µm and heat-dried under atmospheric pressure at 120°C for 3 minutes and aged at 50°C for 24 hours, to give an insulating tape (single-sided pressure-sensitive adhesive tape).

### (Evaluation)

Each of the insulating tapes obtained in Examples and a Comparative Example was measured or evaluated by the following test methods. Evaluation results are summarized in Table 1.

### (1) b* value (chromaticity)

Each of the insulating tapes obtained in Examples and a Comparative Example was bonded to a slide glass ("Matsunami micro slide glass S1111", size: length 75 mm × width 25 mm, thickness 1.0 mm) without incorporation of air bubble, to give a test sample.
The test sample was placed in a thermo-hygrostat ("PL-2KP", produced by ESPEC Corp.) adjusted to an internal environmental condition of 85°C and 85% RH and left there for 500 hours. After storage in the thermo-hygrostat for 500 hours, the test sample was withdrawn under an environment of 23°C and 50% RH, and the b* value in L*a*b* color system of the test sample was determined in accordance with JIS Z8729, by using a simplified-type spectrocolorimeter ("DOT-3", produced by Murakami Color Research Laboratory Co., Ltd.). Measurement results are shown in the column of "b* value" in Table 1. The b* value shown in Table 1 is a value of the sample with the slide glass. The b* value of the slide glass before and after storage in an environment of 85°C and 85% RH for 500 hours was determined for reference, and the b* value before storage was 0.2, while the b* value after storage was 0.6.

### (2) Stringiness

Each of the insulating tapes (single-sided pressure-sensitive adhesive tapes) obtained in Example 2 and Comparative Example 1 was wound around a cardboard tube having a diameter of 3 inch, to give an evaluation sample in roll shape carrying the insulating tape having a length of 50 meters (width: 25 millimeters). The insulating tape was unwound to a length of about 1 meter from the evaluation sample thus obtained, and the stringiness phenomenon at the tape edges was evaluated by visual observation. If no stringiness was observed, it was indicated by O (no stringiness), and if stringiness is observed, it was indicated by × (stringiness). Evaluation results are shown in the column of "stringiness" in Table 1.

### (3) Electric insulating properties

Each of the insulating tapes obtained in Examples and a Comparative Example was cut into a test sample having a size of 50 mm x50 mm. The voltage of continuity (dielectric breakdown voltage) of the test sample was determined in accordance with JIS C2107 at a voltage-increasing rate of 1000 V/sec, as the sample is held between balls each having its own weight of 500 g and a diameter of 12.5 mmΦ in dielectric strength test equipment (manufactured by Tokyo Transformer Co., Ltd.).
When the dielectric breakdown voltage determined was 4 kV or more, it was indicated by O (favorable electric insulating properties), while when it was less than 4 kV, it was indicated by × (unfavorable electric insulating properties). Evaluation results are shown in the column of "electric insulating properties" in Table 1.

**[Table 1]**

| | | | | Reference Example 1 | Example 2 | Comparative Example 1 |
|---|---|---|---|---|---|---|
| Pressure-sensitive adhesive layer | Monomer blending composition | Monomer species Monomer rate (ratio by weight) | | BA/AA/VA 100/3/5 | BA/AA/VA 100/3/5 | BA/AA 100/5 |
| | Blending composition of Pressure-sensitive adhesive composition | Acrylic polymer | Blending amount (parts by weight) | Acrylic polymer A 100 | Acrylic polymer A 100 | Acrylic polymer B 100 |
| | | Tetrad C | Blending amount (parts by weight) | 0.03 | 0.03 | - |
| | | Coronate L | Blending amount (parts by weight) | - | 0.2 | 3.0 |
| Plastic film base | | | | PET film | PET film | PET film |
| Physical properties of insulating tape | b value | | | 0.8 | 1.0 | 4.8 |
| | Stringiness | | | - | ○ | ○ |
| | Electric insulating properties | | | ○ | ○ | ○ |

Abbreviations used in the table are as follows:
BA: n-butyl acrylate
AA: acrylic acid
VA: vinyl acetate
PET: polyethylene terephthalate
Tetrad C: trade name of an epoxy-based crosslinking agent produced by Mitsubishi Gas Chemical Company, Inc.
Coronate L: trade name of an aromatic isocyanate-based crosslinking agent produced by Nippon Polyurethane Industry Co., Ltd.

As obvious from the results in Table 1, the insulating tapes according to the present invention (obtained in Example 2) were resistant to yellowing even after storage in an environment of 85°C and 85% RH for 500 hours and thus, superior in durability in appearance. They are also superior in electric insulating properties, and in the case of a single-sided pressure-sensitive adhesive tape (Example 2), no stringiness occurred.
On the other hand, the insulating tape obtained in the Comparative Example was yellowish in color after storage in an environment of 85°C and 85% RH for 500 hours and thus, inferior in durability in appearance.

## Claims

1. An insulating tape comprising a plastic film base and a pressure-sensitive adhesive layer formed on at least one side of the plastic film base, the insulating tape having b* value after storage in an environment of 85°C and 85%RH for 500 hours determined by the method based on JIS Z8729 of 3.0 or less,
wherein the pressure-sensitive adhesive layer is formed with an acrylic pressure-sensitive adhesive composition containing a crosslinking agent and contains an acrylic polymer as its base polymer,
wherein the crosslinking agent contains an epoxy-based crosslinking agent and/or a non-aromatic isocyanate-based crosslinking agent, and
wherein the crosslinking agent further contains an aromatic isocyanate-based crosslinking agent in an amount of 0.2 to 1 parts by weight with respect to the total amount (100 parts by weight) of the monomer components constituting the acrylic polymer.

2. The insulating tape according to claim 1. wherein the plastic film base is a polyethylene terephthalate film.

3. The insulating tape according to claim 1 or 2, wherein the content of the epoxy-based crosslinking agent and/or the non-aromatic isocyanate-based crosslinking agent is from 0.005 to 5 parts by weight with respect to the total amount (100 parts by weight) of the monomer components constituting the acrylic polymer.

## Patentansprüche

1. Isolierband, umfassend eine Kunststofffoliengrundlage und eine Haftklebeschicht, die auf wenigstens einer Seite der Kunststofffoliengrundlage gebildet ist, wobei das Isolierband einen b*-Wert nach der Aufbewahrung in einer Umgebung mit 85 °C und 85 % relativer Luftfeuchtigkeit während 500 Stunden, bestimmt durch das auf JIS Z8729 beruhende Verfahren, von 3,0 oder weniger aufweist,
wobei die Haftklebeschicht mit einer Acrylhaftklebstoffzusammensetzung gebildet ist, die ein Vernetzungsmittel enthält und ein Acrylpolymer als ihr Grundpolymer enthält,
wobei das Vernetzungsmittel ein Vernetzungsmittel auf Epoxybasis und/oder ein Vernetzungsmittel auf Basis eines nichtaromatischen Isocyanats enthält, und
wobei das Vernetzungsmittel außerdem ein Vernetzungsmittel auf Basis eines aromatischen Isocyanats in einer Menge von 0,2 bis 1 Gewichtsteilen, bezogen auf die Gesamtmenge (100 Gewichtsteile) der Monomerkomponenten, die das Acrylpolymer bilden, enthält.

2. Isolierband nach Anspruch 1, wobei die Kunststofffoliengrundlage eine Polyethylenterephthalatfolie ist.

3. Isolierband nach Anspruch 1 oder 2, wobei der Gehalt des Vernetzungsmittels auf Epoxybasis und/oder des Vernetzungsmittels auf Basis eines nichtaromatischen Isocyanats 0,005 bis 5 Gewichtsteile, bezogen auf die Gesamtmenge (100 Gewichtsteile) der Monomerkomponenten, die das Acrylpolymer bilden, beträgt.

## Revendications

1. Bande isolante comprenant une base de film plastique et une couche d'adhésif sensible à la pression formée sur au moins un côté de la base de film plastique, la bande isolante présentant une valeur b* après 500 heures de stockage dans un environnement à 85°C et sous 85 % HR, déterminée par la méthode basée sur la norme JIS Z8729, de 3,0 ou moins,
dans laquelle la couche d'adhésif sensible à la pression est formée avec une composition d'adhésif sensible à la pression acrylique contenant un agent de réticulation et contient un polymère acrylique à titre de polymère de base,
dans laquelle l'agent de réticulation contient un agent de réticulation à base d'époxy et/ou un agent de réticulation à base d'isocyanate non aromatique, et
dans laquelle l'agent de réticulation contient en outre un agent de réticulation à base d'isocyanate aromatique en une quantité de 0,2 à 1 partie en poids par rapport à la quantité totale (100 parties en poids) des composants monomères constituant le polymère acrylique.

2. Bande isolante selon la revendication 1, dans laquelle la base de film plastique est un film en poly(téréphtalate d'éthylène).

3. Bande isolante selon la revendication 1 ou 2, dans laquelle la teneur en l'agent de réticulation à base d'époxy et/ou en l'agent de réticulation à base d'isocyanate non aromatique est de 0,005 à 5 parties en poids par rapport à la quantité totale (100 parties en poids) des composants monomères constituant le polymère acrylique.
